**Europäisches Patentamt**

**European Patent Office**

**Office européen des brevets**

(11) Veröffentlichungsnummer: **0 084 143**
**B1**

# EUROPÄISCHE PATENTSCHRIFT

(45) Veröffentlichungstag der Patentschrift:
26.02.86

(51) Int. Cl.⁴: **B 01 D 39/14, D 04 H 1/60**

(21) Anmeldenummer: **82111780.1**

(22) Anmeldetag: **18.12.82**

(54) Verfahren zur Herstellung einer Filtermatte.

(30) Priorität: **21.12.81 JP 206647/81**

(43) Veröffentlichungstag der Anmeldung:
**27.07.83 Patentblatt 83/30**

(45) Bekanntmachung des Hinweises auf die Patenterteilung:
**26.02.86 Patentblatt 86/9**

(84) Benannte Vertragsstaaten:
**DE FR GB IT**

(56) Entgegenhaltungen:
**CH - A - 469 847**
**DE - A - 2 140 287**
**DE - A - 2 723 528**
**DE - A - 2 947 349**
**FR - A - 2 156 521**
**US - A - 3 640 839**
**US - A - 3 727 769**

(73) Patentinhaber: **Firma Carl Freudenberg, Höhnerweg 2,
D-6940 Weinheim/Bergstrasse (DE)**

(72) Erfinder: **Tamura, Tadashi, 1139-142 Oh-aza-Oguchi
Ryuoh-cho, Gamou-gun Shiga-ken (JP)**

(74) Vertreter: **Weissenfeld-Richters, Helga, Dr.,
Höhnerweg 2, D-6940 Weinheim/Bergstrasse (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Herstellung einer Filtermatte, insbesondere ein Verfahren zur wirkungsvollen und billigen Herstellung von Filtermatten, insbesondere zur Anbringung an den Ansaugstellen von verschiedenen Instrumenten. Die Filtermatten sollen bei einer guten mechanischen Widerstandsfähigkeit eine große Haltbarkeit und Flexibilität haben sowie eine gute Formbeständigkeit und einen besonders geringen Druckabfall.

Die üblicherweise an den Ansaugstellen von Klimaanlagen, Kühlanlagen, Heizungen, verschiedenen Ventilationseinrichtungen, Luftreinigern und dergleichen verwendeten Filtermatten bestehen aus Netzen aus Polypropylenfasern oder sehr rauhen Vliesstoffen. Diese haben nur eine sehr unbefriedigende Fusselbeständgkeit, was eine Dekontamination der gereinigten Luft durch abgelöste Faserbestandteile zur Folge haben kann. Eine nachträgliche Verstärkung insbesondere der Randzonen durch Absteppen oder Einschäumen in einen Rahmen aus Kunststoff war daher unabdingbar notwendig.

Es ist auch bekannt, flexible Filtermatten flächig zwischen formbeständigen Gittern aus einem Hartwerkstoff einzuspannen. Der gegenseitige Abstand der Stäbe des Gitters ist in diesem Falle unmittelbar abhängig von der vorhandenen Eigenstabilität der Filtermatte, und diese strebt mit sich zunehmend verminderndem Druckabfall einem Minimum entgegen. Große Stabdichten sind daher die unvermeidbare Folge. Sie haben eine unerwünschte Verminderung der aktiv zur Verfügung stehenden Filterfläche zur Folge.

Der Erfindung liegt die Aufgabe zugrunde, ein Verfahren zur Herstellung einer Filtermatte zu entwickeln, das die vorstehenden Nachteile in ihrer Gesamtheit überwindet. Die nach dem vorgeschlagenen Verfahren erhältlichen Filtermatten sollen insbesondere bei minimalem Druckabfall eine optimale Fusselsicherheit aufweisen und die Anwendung sekundärer Stützmaßnahmen erübrigen, wie beispielsweise die Verwendung von Stützgittern oder das Absteppen bzw. Einschäumen der Randzone.

Diese Aufgabe wird erfindungsgemäß dadurch gelöst, daß thermisch erweichbare Fasern allein oder in Abmischung mit nicht erweichbaren Fasern zu einem Vlies vereint werden, das bei einem Flächengewicht von 75 bis 200 g/m² einen Druckabfall von 9,81— 29,4 Pa (1 bis 3 mm Wassersäule) aufweist, gemessen bei einer Luftgeschwindigkeit von 2 m/sec., daß das Vlies auf ein thermisch erweichbares Gitter mit diskret verteilten, konvex ausgebildeten Bereichen aufgelegt wird, die sich um wenigstens 0,3 mm über seine Oberfläche erheben und das einen Schmelzpunkt von 50°C oder mehr unterhalb desjenigen der thermisch erweichbaren Fasern aufweist, daß das so erhaltene Mehrschichtgebilde aus der Richtung des Vlieses auf eine Temperatur erwärmt wird, die 20°C oder mehr oberhalb des Schmelzpunktes des Gitters liegt, jedoch unterhalb desjenigen der thermisch erweichbaren Fasern und daß zur gegenseitigen Verbindung nur die konvex ausgebildeten Bereiche mit dem Vlies gleichzeitig oder unmittelbar anshließend an die Erwärmung gemeinsam verpresst werden.

Der Gegenstaqnds der vorliegenden Erfindung wird nachfolgend anhand der in der Anlage beigefügten Zeichnungen näher erläutert. Es zeigen:

Figur 1 die Durchführung des vorgeschlagenen Verfahrens unter Verwendung eines unsymmetrisch beheizten Kalanders für die gegenseitige Verbindung des Gitters und des Vlieses.

Figur 2 die Verfahrensweise gemäß Figur 1, wobei die unsymmetrische Erwärmung des Mehrschichtgebildes durch einen Infrarotstrahler vorgenommen wird.

Figur 3 eine ausschnittsweise Vergrößerung aus den Figuren 1 und 2 im Bereich der Kalanderzone.

Figur 4 ein Gitter der erfindungsgemäß eingesetzten Art in der Draufsicht.

Figur 5 das Gitter aus Figur 4 in quergeschnittener Darstellung.

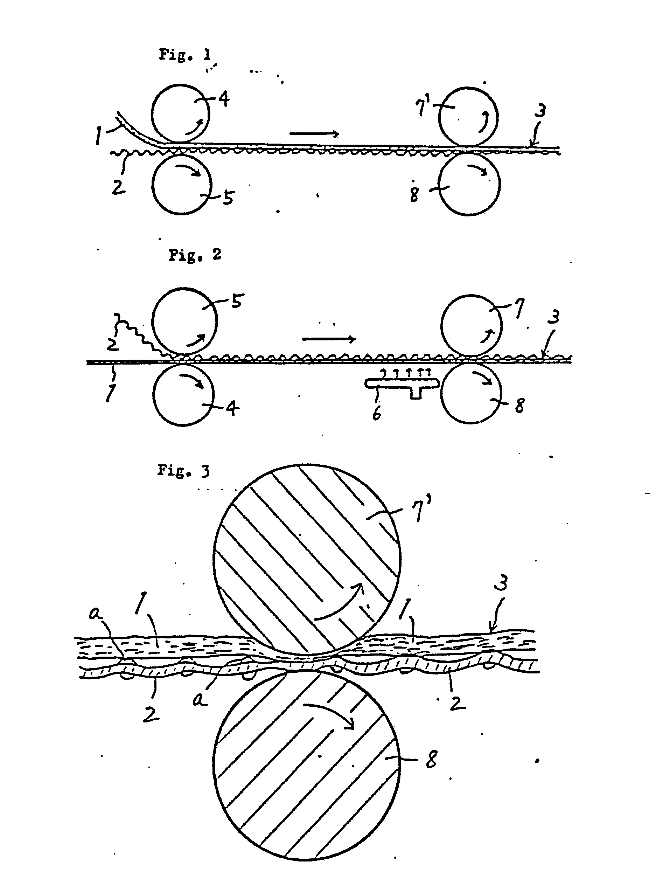

Bei der in den Figuren 1 und 2 skizzierten Vorgehensweise werden in einem ersten Arbeitsschritt das verwendete Vlies 1 und das verwendete Gitter 2 aufeinandergeschichtet und zur Gewährleistung einer gleichmäßigen Berührung zwischen konvex ausgebildeten Bereichen des Gitters und der Oberfläche des Vlieses durch einen Kalander, bestehend aus den Walzen 4 und 5 hindurchgeführt. Der Effekt läßt sich verstärken durch eine geringfügige Erwärmung gegebenfalls beider Walzen des Kalanders, die jedoch den Schmelzpunkt von einer in den beiden Flächengebilden enthalten'en Komponente nicht überschreiten darf.

Das so erhaltene Mehrschichtgebilde wird anschließend unsymmetrisch erwärmt, um eine thermische Erweichung möglichst nur der konvex ausgebildeten Bereiche des Gitters zu erzielen. Diese werden dadurch in einen klebrigen Zustand überführt und treten während der gemeinsamen Verpressung mit dem Vlies zu diesem in eine adhäsive Verbindung.

Die vorstehend geschilderte Erwärmung und Verpressung sind bei der Vorgehensweise nach Figur 1 in einer einzigen Verfahrensstufe zusammengefaßt. Sie besteht darin, daß aus Vlies 1 und konvexe Bereiche aufweisendem Gitter 2 bestehende Mehrschichtgebilde durch einen unsymmetrisch beheizten Kalander 7', 8 hindurchzuleiten. Die Kalanderwalze 7' weist eine höhere Temperatur auf als die Kalanderwalze 8, und hierdurch in Verbindung mit der größeren Werkstoffdichte im Walzenspalt im Bereich der Verdickungen des Gitters bildenden, konvexen Bereiche gelingt es, das Gitter nur in diesen Bereichen auf die für ihre Verklebung mit dem Vlies erforderliche Temperatur zu erwärmen. Der Vorgang wird in Figur 3 in vergrößerter Darstellung verdeutlicht.

Bei der Vorgehensweise nach Figur 2 ist demgegenüber dem aus den Walzen 7 und 8 bestehenden Kalander ein auf der Seite des Vlieses angeordneter Infrarotstrahler 6 unmittelbar vorgeschaltet. Die von diesem imitierte Wärme ist so bemessen, daß die das Vlies berührenden, konvexen Bereiche des Gitters thermisch erweichen und während des anschließenden Kalandervorganges mit dem Vlies zu verkleben vermögen.

Für die Durchführung des vorgeschlagenen Verfahrens ist es notwendig, daß das verwendete Vlies ein Flächengewicht von 75 bis 200 g/m² aufweist sowie einen Druckabfall von 9,81—29,4 Pa (1 bis 3 mm Wassersäule), gemessen bei einer Luftgeschwindigkeit von 2 m/sec. Vliese mit einem größeren Flächengewicht als 200 g/m² haben demgegenüber eine zu geringe Wärmeleitfähigkeit, wodurch es schwierig ist, die zugehörigen Gitter nur in den konvexen Bereichen auf die erforderliche Temperatur zu erwärmen.

Vliese, die zu dick sind, führen zu Schwierigkeiten während des thermischen Verpressens. Ähnlich zeigen Vliese, deren Druckabfall höher ist als 29,4 Pa (3,0 mm Wassersäule), gemessen bei einer Luftgeschwindigkeit von 2 m/sec., eine geringe Wärmeleitfähigkeit und es kann dadurch schwierig sein, die konvexen Bereiche der zur Anwendung kommenden Gitter 2 im erforderlichen Maße zu erschmelzen.

Werden demgegenüber Vliese verwendet, die ein Flächengewicht von weniger als 75 g/m² aufweisen und/oder einen Druckabfall von weniger als 9,8 1 Pa (1 mm Wassersäule), gemessen bei einer Luftgeschwindigkeit von 2 m/sec., dan wird nur ein unzureichender Filtrationsgrad erreicht, was ebenfalls nicht erwünscht ist.

Die zur Anwendung kommenden Vliese können ganz oder teilweise aus synthetischen Fasern hergestellt werden, wie beispielsweise aus Polyesterfasern, Polyamidfasern, Polyacrylnitrilfasern, Polyvinnylalkoholfasern, Polypropylenfasern, Polyfuralfasern, Polyimidfasern, Phenolfasern und dergleichen. Diese können einzeln oder in gegenseitiger Durchmischung mit irgendeiner oder mehreren der gennanten Faserarten zur Anwendung kommen, wobei das gebildete Vlies gegebenenfalls durch Imprägnierung mit einem Bindemittel und/oder durch eine thermische oder mechanische Nachbehandlung, wie beispielsweise einen Nadelungsvorgang, eine zusätzliche Verfestigung erfahren kann.

Es ist grundsätzlich möglich, irgendein für die Verwendung von Vliesstoffen verwendetes Bindemittel zu verwenden. Bevorzugt werden im vorliegenden Falle jedoch wärmehärtbare Harze, um zu erreichen, daß das Vlies im Ahschluß an seine Verpressung mit dem Gitter die ursprüngliche Stärke wieder annimmt.

Die zur Anwendung kommenden Gitter aus einem synthetischen Harz müssen die folgenden Bedingungen erfüllen:

1. Es müssen diskret verteilte, konvex ausgebildete Bereiche vorhanden sein, die die übrige Oberfläche um wenigstens 0,3 mm überragen.

2. Die Ansahl der konvex ausgebildeten Bereiche je Flächeneinheit darf nicht zu groß sein.

3. Das Material, aus dem die Gitter hergestellt sind, muß bei einer Temperatur von wenigstens 50° C unterhalb des Schmelzpunktes der thermoplastischen Fasern des Vliesstoffes erschmelzen.

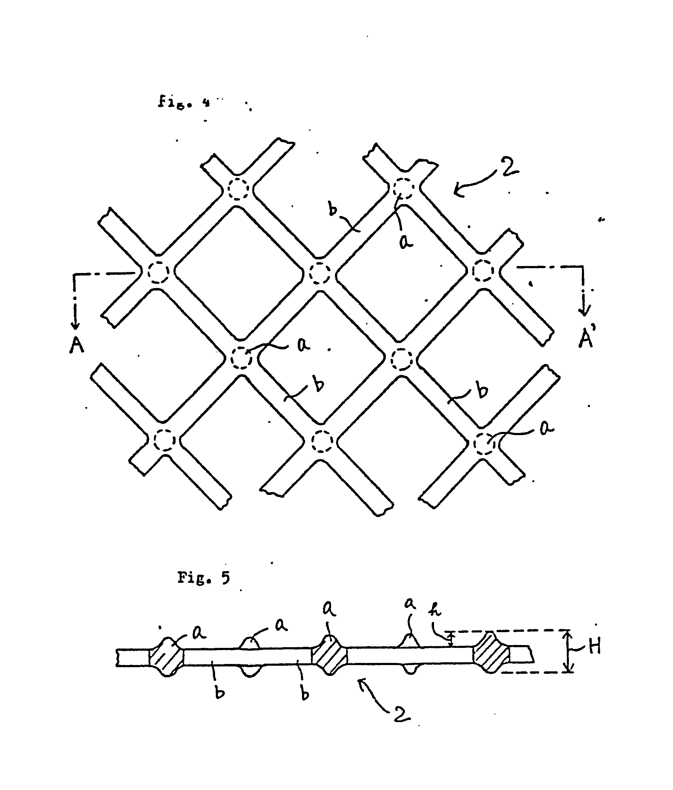

In Figur 4 ist ein Ausschnitt aus einem solchen Gitter in der Draufsicht wiedergegeben, Figur 5 zeigt diesen Ausschnitt in quergeschnittener Darstellung entlang der Linie A—A'.

Das Gitter 2 besteht, wie aus beiden Figuren 4 und 5 klar ersichtlich, im wesentlichen aus einer in regelmäßigen Abständen Durchbrechungen aufweisenden Folie aus Kunststoff. Die einzelnen Durchbrechungen sind nur durch relativ schmale Stege b voneinander getrennt, die an den Knotenpunkten beiderseits zu konvex ausgebildeten Bereichen a vedickt sind. Diese überragen das Niveau der übrigen Stege um das Maß h von wenigstens 0,3 mm, wodurch sichergestellt ist, daß die Stege nach dem Auflegen auf das Vlies von diesem zunächst einen gleichgroßen Abstand haben. Ist der Wert h geringer als 0,3 mm, dann besteht die Gefahr, daß die für die Anbindung des Vlieses erforderliche Erweichung der konvex ausgebildeten Bereiche a auf die Stege b übergreift, was zu einem erhöhten Druckabfall führt und insofern nicht erwünscht ist.

Der Wert 0,3 mm stellt in diesem Sinne auch lediglich einen Mindestwert dar und kann gegebenenfalls geringfügig vergrößert werden bis zu einem Wert von maximal 0,9 mm.

Der Lochflächenanteil des Gitters soll wenigstens 50 % betragen, bevorzugt wenigstens 62 %. Der geringste gegenseitige Abstand der konvex ausgebildeten Bereiche beträgt dementsprechend bevorzugt 8 bis 20 mm.

Der Schmelzpunkt des Gitters muß wenigstens 50° C weniger betragen als der Schmelz- oder Zersetzungspunkt von in dem Vlies enthaltenen Bestandteilen. Hierdurch wird sichergestellt, daß die durch Hitze und Druck bedingte Veränderung der konvex ausgebildeten Bereiche a des Gitters 2 unter Vermeidung einer Einbeziehung von Bestandteilen des Vlieses im wesentlichen auf diese beschränkt bleibt. Die technische Realisierung gelingt um so einfacher, je größer der Abstand der beiderseitigen Schmelzpunkte ist bzw. des Schmelzpunktes des Werkstoffes des Gitters einerseits und des Zersetzungspunktes der Fasern des Vlieses andererseits.

In diesem Sine kommen für die Herstellung der Gitter bevorzugt Kunstharze zur Anwendung, die einen beträchtlich niedriger liegenden Schmelzpunkt haben als die vorstehend erwähnten Fasern, insbesondere Polyäthylen, Polyvinylchlorid-Copolymer, Äthylenvinylacetat-Copolymer, PVC und dergleichen. Der bevorzugte Werkstoff ist Polyäthylen.

PVC hat in Abhängigkeit von dem jeweiligen Weichmachergehalt einen unbestimmt gelagerten und sehr eng begrenzten Erweichungsbereich, was die Anwendung sehr präziser Temperatursteuerungen zur Erzielung eines guten Ergebnisses erforderlich macht.

Das Laminat soll vor oder während seiner Verbindung in einem Kalander auf eine Temperatur von wenigstens 20° C oberhalb des Erweichungspunktes des Netzes erwärmt werden um eine gute Einbindung der Fasern des Vlieses in die konvex ausgebildeten Bereiche a zu gewährleisten. Insbesondere bei einer schnellen Arbeitsweise kann eine noch stärkere Erwärmung unter Einhaltung der übrigen Randbedingungen zweckmäßig sein, sofern sichergestellt ist, daß eine die mechanische Stabilität der Stege b beeinträchtigende Erweichung in diesen Bereichen unterbleibt.

Obwohl die Bedingungen für das Verpressen, das gleichzeitig mit dem Erhitzen oder danach durchgeführt werden kann, nicht speziell beschränkt sind, ist es natürlich erforderlich, daß der Abstand zwischen den Druckwalzen 7, 8 bzw. 7', 8 so gewählt wird, daß eine gute und auf die konvex ausgebildeten Bereiche a beschränkte Verbindung zwischen dem Vlies und dem Gitter aus thermoplastischem Kunststoff erhalten wird. Bei üblichen Vliesen der vorstehend näher definierten Art ist das gewöhnlich der Fall, wenn der Wert geringfügig unterhalb der Gesamtdicke H des Gitters liegt.

Die nach dem vorgeschlagenen Verfahren erhältlichen Filtermatten beinhalten insofern ein Filtervlies, das im wesentlichen nur punktförmig abgetragen wird. Nahezu die gesamte Fläche des Vlieses steht hierdurch für Filterzwecke zur Verfügung, was die Erzielung eines minimalen Druckabfalls bei guter Filterleistung ermöglicht.

Das Vlies bildet darüberhinaus zusammen mit dem es tragenden Gitter eine einfach zu handhabende und billig herzustellende Baueinheit, die sich durch eine besonders gute Formstabilität auszeichnet. Bemerkenswert ist die große mechanische Widerstandsfähigkeit und die einfache Konfektionierbarkeit der vorgeschlagenen Filtermatte. Diese kann leicht in jeder gewünschten Größe zugeschnitten werden und als ebenes oder als beliebig gefaltetes Blatt eingesetzt werden. Eine Randbearbeitung ist unnötig, und Beschädigungen lassen sich leicht reparieren.

## Patentanspruch

Verfahren zur Herstellung einer Filtermatte, dadurch gekennzeichnet, daß thermisch erweichbare Fasern allein oder in Abmischung mit nicht erweichbaren Fasern zu einem Vlies vereint werden, das bei einem Flächengewicht von 75 bis 200 g/m² einen Druckabfall von 9,8 1—29,4 Pa (1—3 mm Wassersäule) aufweist, gemessen bei einer Luftgeschwindigkeit von 2 m/sec., daß das Vlies auf ein thermisch erweichbares Gitter mit diskret verteilten, konvex ausgebildeten Bereichen aufgelegt wird, die sich um wenigstens 0,3 mm über seine Oberfläche erheben und das einen Schmelzpunkt von 50°C oder mehr unterhalb desjenigen der thermisch erweichbaren Fasern aufweist, daß das so erhaltene Mehrschichtgebilde aus der Richtung des Vlieses auf eine Temperatur erwärmt wird, die mindestens 20°C oberhalb des Schmelzpunktes des Gitters liegt, jedoch unterhalb desjenigen der thermisch erweichbaren Fasern und daß zur Verbindung nur die konvex ausgebildeten Bereiche mit dem Vlies gleichzeitig oder unmittelbar anschließend an die Erwärmung gemeinsam verpresst werden.

## Revendication

Procédé de fabrication d'un milieu filtrant, caractérisé en ce que des fibres pouvant être ramollies thermiquement, seules ou en mélange avec des fibres ne pouvant être ramollies, sont réunies en un voile qui, avec un poids superficiel de 75 à 200 g/m2, présente une réduction de pression de 9,81—29,4 Pa (1 à 3 mm en colonne d'eau), mesuré à une vitesse d'air de 2 m/ seconde, le voile étant posé sur une grille pouvant être ramollie thermiquement et comportant des zones de forme convexe réparties de manière discrète s'élevant d'au moins 0,3 mm audessus de sa surface, avec un point de fusion de 50°C ou plus enn dessous de celui des fibres pouvant être ramollies thermiquement, l'article à plusieurs couches ainsi obtenu étant chauffé, en dehors du voile, à une température qui est supérieure de 20°C ou plus au point de fusion de la grille, tout en étant toutefois inférieure à celle des fibres pouvant être ramollies thermiquement et, pour l'assemblage mutuel, on presse uniquement les zones de forme convexe avec le voile simultanément ou immédiatement après l'échauffement.

## Claim

A process for the production of a filter mat, characterised in that thermally softenable fibres, as the only fibres or mixed with non-softenable fibres, are combined to form a web which at a weight per unit area of 75 to 200 g/m² shows a pressure drop of 9.81—29.4 Pa (1—3 mm water gauge), measured at an air speed of 2 m/sec, the fleece is placed on a thermally softenable grid having discretely distributed convex regions which protrude at least 0.3 mm above its surface and having a melting point which is 50°C or more below that of the thermally softenable fibres, the laminate structure thus obtained is heated from the direction of the web to a temperature which is at least 20°C above the melting point of the grid but below that of the thermally softenable fibres, and for bonding only the convex regions are pressed conjointly with the web, simultaneously with or immediately after the heating process.

0 084 143

Fig. 1

Fig. 2

Fig. 3

1

Fig. 4

2

b

a

A

a

b

a

b

A'

a

Fig. 5

a   a   a   a   h

b   b

2

H